(19)

Europäisches
Patentamt
European
Patent Office
Office européen
des brevets

(11)     **EP 2 259 017 B1**

(12)                **EUROPEAN PATENT SPECIFICATION**

(45) Date of publication and mention
of the grant of the patent:
**02.05.2012   Bulletin 2012/18**

(51) Int Cl.:
***G01C 5/04*** *(2006.01)*          ***G01C 7/02*** *(2006.01)*

(21) Application number: **09425205.3**

(22) Date of filing: **25.05.2009**

(54) **Differential level monitoring device**

Vorrichtung zur differentiellen Vermessung von Höhenlagen

Dispositif de mesurage différentiel d'altitudes

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**08.12.2010   Bulletin 2010/49**

(73) Proprietor: **Agisco S.r.l.**
**20124 Milano (IT)**

(72) Inventors:
• **Robotti, Franco**
**20090 Segrate (IT)**

• **Mainardi, Umberto**
**24020 Villa Di Serio (BG) (IT)**

(74) Representative: **Zizzari, Massimo et al**
**Studio Zizzari**
**P.le Roberto Ardigò, 42**
**00142 Roma (IT)**

(56) References cited:
**EP-A1- 1 577 640     DE-A1- 2 347 105**
**JP-A- 9 196 711**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The document DE-A-23 47 105 describes a device for measuring seafloor profile comprising an airtight tubular structure accommodating a number of pressure transducers placed at measurement points along the tubular structure, for measuring the respective absolute hydrostatic pressure. The device comprises further means for acquiring data from the pressure transducers and for transmitting them to an external control unit which calculates the altitude profile of the device along its longitudinal dimension.

This invention concerns a device specifically tailored to detect and measure the land profile or, more specifically the seabed profile from few meters up to many kilometres.

More specifically, the instrument is able to detect some vertical differential or specific settlements of soil and seabed profile, and monitor its development in the course of time, as a function, for example, of currents, earthquakes and/or *subsidence* events. This instrument's specific structure allows operation even in very harsh environments with extremely high outer pressure (up to about 10 MPa) on earth or undersea environment.

The instrument works on the principle of the *communicating vessels*, and basically uses two circuits: the former made of an hydraulic pipe, the latter made of a pneumatic pipe. The altitude profile variations at different points along the hydraulic piping cause matching variations of the inner pressures due to the fact that the contained liquid free surface, in hydrostatic equilibrium, tends to follow an equipotential surface of the earth gravity field. The pneumatic circuit, filled with air or gas at a constant pressure, is communicating with the former hydraulic circuit at different points. Some proper means are installed, in correspondence to the position of these points, to detect the pressure difference in respect of a reference point, called *benchmark*, and consequently the altitude profile difference that is directly proportional.

By so doing it is possible to define the geometrical profile of altitude variations all along the longitudinal length of the same device. The bigger the number of measuring points the more detailed will result the reconstructed profile.

The state-of-the-art reports an attempt to solve this technical problem by means of a special equipment laid on the seabed that measures, using a pressure transducer, the weight of the upper water column. A variation in time of the detected pressure involves a level variation of the equipment vertical position and, consequently, a possible subsiding movement of the seabed. It is clear that this solution involves some significant and difficult drawbacks due to the extent of displacements to be measured in comparison to a reference absolute value.

Let's imagine, as an example, an equipment placed on the seabed at 100 m depth, to detect displacements of centimetres in magnitude. Additional measurement problems are likely to arise from the dynamical components of natural events, such as surface waves, tidal currents, etc. In addition, the device working principle requires, when installed, to protrude from the seabed, thus exposing the instrument to a risk of damage, unless expensive structures are provided as special shielding. Furthermore, standard operations and maintenance activities would require a frequent access by skilled diving technicians, both for collection of recorded data, and replacement of power batteries.

This invention will overcome and solve all above problems, its main goal consisting in the development of a measuring device tailored to measure the development of soil or seabed geometrical profile. The device would be totally sealed off and house a pressurised hydraulic circuit where differential pressure transducers are placed.

Another goal consists in the supply of data related to measured pressures with reference to respective points of the same hydraulic circuit. These data would be compared to the pressure measured at a specific point of the circuit, the so called *benchmark*.

Another objective consists in the same device including computing means for pressure differences calculation, for storage of recorded data, and for remote data transmission.

A further objective is that the above said transducers are calibrated so to detect pressure variations in a range comparable to the full scale. The same full scale can be duly calibrated so to free the measurement from possible *zero drift* effects, due to temperature variations or to ageing of components.

Another advantage is the device's modularity: it is possible to add or remove some single measuring modules, depending on specific installation requirements, and, in case of failure, exclude one or more modules without jeopardising the overall system operation.

Another goal is the possibility of laying the device on the seabed, close to an off-shore platform or any other submerged structure, and covering it with a thick enough soil layer so to be protected against shocks or natural submarine phenomena.

A further advantage consists in the possibility of connecting the device to an external cable, laid along the above said undersea structure, to allow remote data transmission and reception of non stop power supply necessary for operations.

Therefore, the core of this invention is a specific device as claimed in claim 1, tailored to measure the development of soil and/or seabed surface profile, essentially consisting of a watertight/airtight casing that houses :

- an hydraulic pressurized circuit, extending along a longitudinal direction, containing specific liquid;
- a pneumatic circuit, extending along the same longitudinal direction and in connection with the above hydraulic circuit at one or more points. The pneumatic circuit, filled with air at constant pressure or inert gas, allows pressurisation of the above said hydraulic circuit;

- a set of differential pressure transducers, placed at the above said one or more communication points, between the hydraulic and the pneumatic circuits;
- an electronic control circuit which includes: data acquisition units (being data supplied by above pressure transducers and related to pressure measurements taken on above one ore more *benchmarks*), computing means for pressure difference calculation in respect to a reference point, the so called *benchmark*; storage means for recorded data; and means for data transmission to a remote acquisition unit;

so to allow computation of altitude difference between the above one or more points, in respect to the *benchmark*. Such an altitude difference, being proportional to the detected pressure difference, according to the *communicating vessels* principle, determines the altitude profile of the device along the entire measuring line.

Compared to known devices, the present invention offers further advantages such as: very high accuracy and resolution of the recorded data (range of vertical displacements detected up to 0.1 mm); measurement of altitude profile ranging from 2 meters up to many kilometres; sturdiness of components and casings; use of standard components, resulting in a cost effective, long-lasting and reliable device.

This invention is now being described for illustrative but not limitative purposes, with particular reference to figures of the enclosed drawings, where:

figure 1 is a perspective view of a device, measuring the seabed profile, installed close to an undersea structure (like an oil platform);

figure 2 is a lateral view of the same device in figure 1, where the installed position of its main components follows the seabed profile;

figure 3 is a schematic view of the hydraulic and pneumatic circuits, housed in the same device, where a set of differential pressure transducers are visible in their positions along the longitudinal direction;

figure 4 is a schematic view of a single module of the same device where the pressure transducer is placed at the junction between the hydraulic and the pneumatic circuit;

figure 5 is a schematic view of a single module of the same device where a switch valve makes the pressure transducer be activated by the same hydraulic pressure on both ends.

figure 6 is a lateral cross-section view of a single module of the same device just like the one of previous figures 4 and 5, where the inner components and the electronic boards are better visualized;

figure 7 is a front cross-section view of a connecting pipe between the above modules, where the pipe sections connecting the hydraulic and pneumatic circuits plus a couple of electrical cables are shown;

figure 8 is a block diagram of the electronic components in charge of the transmission and storage of recorded data and power supply.

It is here underlined that only few of the many conceivable embodiments of the present invention are described, which are just some specific non-limiting examples, having the possibility to describe many other embodiments based on the disclosed technical solutions of the present invention. The other different figures show the same elements using the same reference numbers.

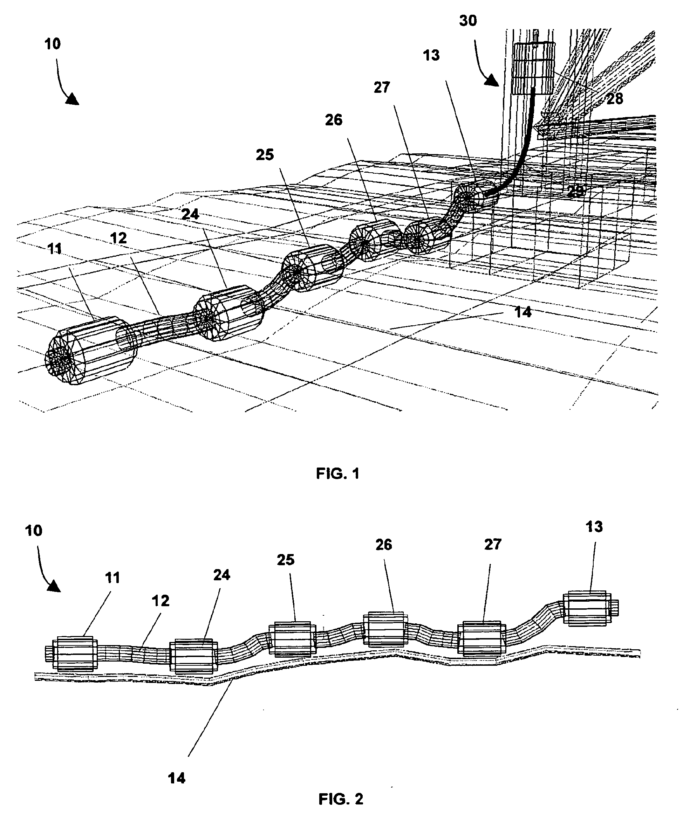

Figures 1-2 show a device 10 for measurement of a seabed profile 14. It is formed by a number of units 11, 24, 25, 26, 27, and a reference unit 13, connected one another, in order to compose a structure extending along the longitudinal direction. Units 11, 24, 25, 26, 27, are the so called *measuring modules*, instead unit 13 is the so called *benchmark*.

Device 10 is placed on an underwater soil, along a path where measurement and/or monitoring of the area profiles is required for a very long lapse of time (i.e. years); this soil could be a seabed, a lake bed, a river bed; or other soils where activities of particular geological interest occur.

*Measuring modules* 11, 24, 25, 26, 27, are identical both for their electro-mechanic characteristics and for their measurement performances, which number depends on: the extension of the area to be monitored, the nature of the event, and on the resolution or detail level required.

The positions of modules 11, 24, 25, 26, 27, 13, are usually at a fixed distance one another, along the detection path, and do not required any special operation other than their assembly in the device before the installation process on site.

*Measurement modules* 11, 24, 25, 26, 27, and *benchmark n.* 13, are respectively joined one another by means of the electro-hydraulic connection pipe 12, so to form a unique uninterrupted strip, having a length that may even reach some kilometres.

Connecting pipe 12 has a shape, mechanical characteristics and size, such to allow device 10 to be laid on seabed, or lake bed, or cross-laid on a river bed or any other water stream. The same connection pipe 12 is watertight and fully sealed, thus keeping all the inner components at a constant pressure regardless to the high pressure of the depth they are subjected. The seal of device 10 guarantees its operation at any depth, independently on the outer undersea pressure. Furthermore, device 10 houses an electronic equipment, placed at each single module, that is connected by a transmission cable 29 to a remote control unit 28, which is in charge of data exchange and power supply to/from external units. The remote control unit 28 can be fixed to underwater structure 30, for example, or to an oil platform, and be connected to the surface by a cable running up along the structure 30.

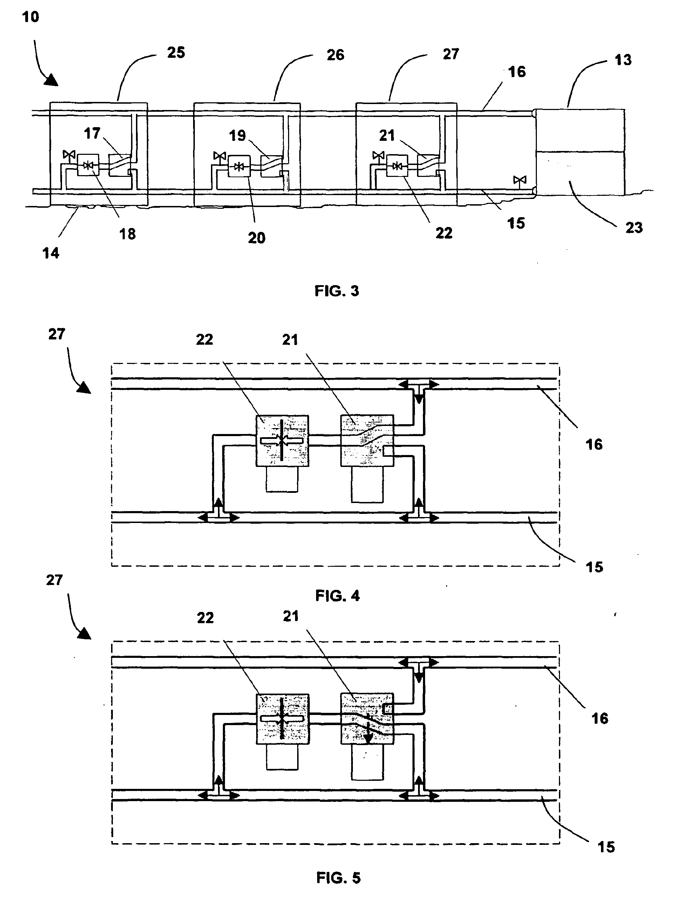

With reference to figure 3, all measuring modules (i.e. 25, 26, 27) are connected to a unique hydraulic circuit 15, and to a unique pneumatic circuit 16, both in common to all the modules. The measurement is taken by calculating the pressure difference between the hydraulic circuit 15 and the pneumatic circuit 16 along the detecting points respectively (i.e. 18, 20, 22).

This measuring method is based on the *communicating vessels* principle, where the difference of altitude profile between a specific point in the hydraulic circuit 15 and a reference vessel 23 full of liquid and connected to the same circuit 15 causes a difference of internal pressures transmitted by the same liquid that pulls/pushes at the same above points. At each detection point (i.e. 18, 20, 22) an hydraulic piezometric load is therefore applied to the respective differential pressure transducer which is directly proportional to the liquid volume contained in the section of the hydraulic pipe up to the reference vessel 23.

The detected pressure at each module $P_i$ is equal to the difference of pressures on the respective membranes of the differential transducer, that is:

$$P_i = P_{R,i} - P_{A,i} = \rho g h_i + P_A - P_{A,i} \qquad (1)$$

where $P_{R,i}$ is pressure in respect of reference 23, $P_A$ is the atmospheric pressure, $P_{A,i}$ is the atmospheric pressure detected locally, $\rho$ is the fluid density, $g$ is the gravity constant value and $h_i$ is the height of column in respect of reference 23. Considering that the atmospheric pressure is kept constant all along device 10, by the common pneumatic circuit 16, it is obtained:

$$P_A = P_{A,i} \qquad (2)$$

and then:

$$P_i = \rho g h_i \qquad (3)$$

According to the principle of the *communicating vessels* and to the *Stevin's Law*, said inner pressure, at the transducer, can be expressed by the formula:

$$P_i = \rho g h_i = \rho g h = P_A \qquad (4)$$

As a consequence, the difference of pressure $P_i$ detected by transducers is directly proportional to the difference of height $h_i$ between respective measure units 25, 26, 27, and the reference unit 13. Thus, it is possible to define the height $h_i$ difference as a function of pressure $P_i$ difference:

$$h_i = h \frac{P_A}{P_i} \qquad (5)$$

With reference to measurement module 27, figures 4-5 show a further element particularly suitable for the correct *calibration* of the pressure transducer 22, and for the compensation of possible *zero drift*, due, for example, to temperature variation or ageing of materials.

This element consists of a switch valve 21, placed before the said pressure transducer 22, which switches on demand to the pneumatic circuit 16 (like in figure 4) or to the hydraulic circuit 15 (like in figure 5).

In its *standard working* conditions (figure 4), the pressure transducer 22 receives on a first membrane the pressure from the hydraulic circuit 15, and on the second membrane the pressure from the pneumatic circuit 16, so that it detects the difference of pressures at the same point.

Considering the error component affecting the value of pressure $P_i$, and the value of pressure $P_A$, the result of measurement is:

$$U_{MIS}=(P_R+E_{P1})-(P_A+E_{P2})-U_{ZERO} \qquad (6)$$

where $U_{MIS}$ is the output value from transducer 22, $E_{PI}$ is the error component on the reference pressure $P_R$, $E_{P2}$ is the error component on pressure $P_A$, and $U_{ZERO}$ is the latest detected zero value. In the *calibration* position (figure 5), the pressure transducer 22 receives on a first membrane the pressure from the hydraulic circuit 15, and on the second membrane the pressure from the same hydraulic circuit 15, so that it detects the zero value, that is:

$$U_{ZERO}=(P_R+E_{P1})-(P_R+E_{P2})=E_{P1}-E_{P2} \qquad (7)$$

Once the parameter $U_{ZERO}$ is evaluated, it can be replaced in the previous formula (6) related to the *standard working* conditions of the device, so that *zero drift* compensation can be obtained..

The calibration procedure is carried out through specific commands, sent from a remote site to the inner electronic circuits, otherwise it can be achieved in a completely stand-alone mode, provided by a control *software* for automatic and routine calibration of the device.

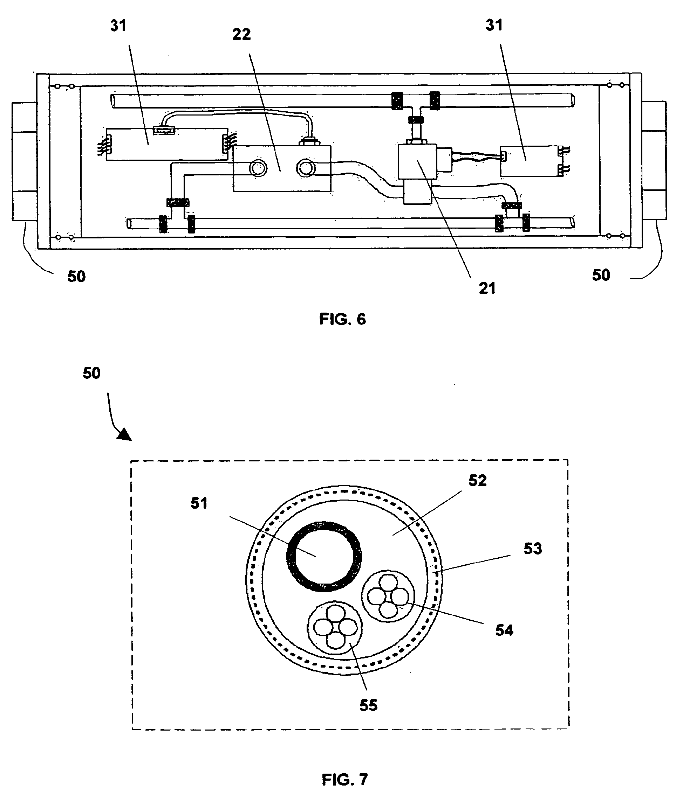

Figure 6 shows the position of instrument 31 housed by each measuring module. The same instrument, or so called electronic circuit 31, sends electric signals to actuators so to allow switching of valve 21 towards the *calibration* position or towards the *standard working* position.

In the *calibration* position, instrument 31 detects and acquires the zero value from pressure transducer 22, and calibrates the inner compensation parameters. In the *standard working* position, the same instrument 31 acquires a pressure reading from transducer 22, calculates the pressure difference in respect of the *benchmark* point 13, and sends the data to a remote in/out control unit 28.

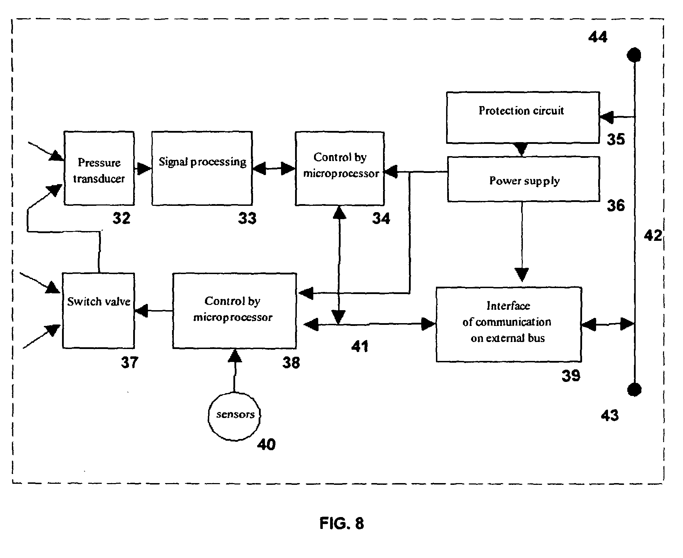

Figure 8 shows a block diagram of the electronic components performing the communication process for data reading and control, and the power supply.

The electrical signals, coming from pressure transducer 32, are processed in the electronic circuit 33 that includes: a two-channel amplifier with strain gauge, a double DC current generator, a sensor for inner temperature, and a multi-channel high resolution A/D converter. Circuit 33 is controlled by module 34, that includes a microprocessor with a non-volatile memory storing the data from the calibration process, the sensitivity value and the zero value.

The calibration data are referred to the inner temperature and are processed by a specific algorithm that converts electrical signals in a high resolution pressure measurement, thus compensating the zero measurement in a range from 0 to 50°C. Furthermore, module 33 communicates directly with the inner bus 41 and through module 39, with the field bus 42, that is external and in common to all the measuring modules, through the electric communication lines (ports 43 and 44). Module 39 provides the impedance matching, insulation and electric protection of the communication active elements 34, 38 against possible damages caused by induced events on the external communication lines.

Module 38 provides the remote control to the electric valve, or switch valve 37, in order to activate the compensation function against possible *zero drift*, as previously described. The same module 38 includes a microprocessor that generates the control signals for the actuator of valve 37, according to an optimisation process for energy saving. This process consists in a maximum voltage supply to valve 37 at the very beginning of actuation to decreased voltage to a minimal operating level, during the reading of the zero value.

The measuring module also houses some sensors 40 in correspondence to the closing elements and the O-rings so to detect any possible humidity increase or even water inflowing device 10. Sensors 40 are kept under control by circuit 38 that, through module 39 and field bus 42, sends a warning signal to the external unit 28 in case of malfunctioning and/or system failures. The electronic components are further protected and isolated from the power supply lines through circuit 35. Power unit 36 provides the required power supply and adapt the input voltage to the values requested by the electronic circuits, in a range from 10V to 200V, depending on the distance and the number of measuring modules - 25, 26, 27 - working contemporarily.

With reference to the entire device 10, as already said, all the measuring modules 11, 24, 25, 26, 27 and *benchmark* 13 are interconnected through connection pipes which house the tubing sections of the hydraulic circuit 15 and of the pneumatic circuit 16, plus two connection electrical cables.

Figure 7 shows a section of a connection pipe 50, having an external surface 53 made of an hydraulic rubber tube, stiffened by an embedded steel sheath to provide high robustness and long life.

The connection pipe 50 is waterproof and airtight and, during assembly, the inner part 52 is saturated with an inert gas at atmospheric pressure. Atmospheric pressure can be kept steady even in case of slight mechanical deformations that may occur during system installation at very high depth. An elastic membrane, close to the pneumatic circuit, at the side of *benchmark* 13, is able to compensate possible small variations of volume, and consequently variations of pressure, for the gas contained inside. The same connection pipe 50 contains the hydraulic sections 51 which connect the modules of device 10 plus a couple of independent tubes containing the electrical cables 54 and 55. Some electrical cables provide the power supply to the electronic gauges such as to the measuring circuits, differential transducers, communication interfaces, switch valves and control interfaces; whereas other cables convey the transmission of digital data from/to the external control unit 28.

In order to increase the reliability of device 10 against risks of failure in the single modules, above tubes 54 and 55 connect all the modules in even positions and in odd positions respectively. By so doing the same device 10 will not stop working even in case of failure of a single module that would cause the interruption of the electrical transmission chain, thus assuring at least the 50% of functionality.

This invention involves many different achievements depending on the technical and project parameters aiming at a specific final application. As a general reference, the number of measurement modules 25, 26, 27 may range from 2 to 250, and the overall length of device 10 may range from 2 metres to many kilometres. The arrangement of modules 25, 26 and 27 may follow a linear geometrical profile, as previously described, but may also have a spokes or a tree pattern.

Each of the same modules 25, 26, 27 may have a cylindrical shape, with 0 size ranging from 60 to 200 mm, and ranging from 150 to 800 mm as length. As for the materials, the measuring modules 25, 26, 27 are made of plastic such as *nylon*77®, or metal such as stainless steel *AISI 316L*; instead each connecting pipe 50 is made of a specific material such as *nylon*®, *rilsan*® or polypropylene. The liquid in the hydraulic circuit 15 is a steady and anti-corrosive fluid, having a density of more than 0.5 kg/m$^3$ : for on-shore applications the liquid to be used may be a diluted ethylene glycol, or a very fluid silicone oil (1-2 Cst); instead, for off-shore applications the liquid to be used has to be a substance with a low environmental impact, such as *galden*® or *fomlin*®.

After description of above examples there is evidence to say that this invention achieves all its goals and, In particular, a special device specifically suitable to measure the development of land and seabed profile. This device, fully sealed from the outer environment, houses a pressurised hydraulic circuit with a range of differential pressure transducers. These differential pressure transducers supply the pressure data taken at different points of the same hydraulic circuit. These data are compared to the pressure value taken at a specific point of the circuit, the so called *benchmark*.

Furthermore, the same device includes means for calculation of pressure differences, for storage of recorded data, and for remote data transmission.

The same invention involves transducers to be calibrated to detect pressure variations in a range comparable to the full scale value. Such a full scale may be duly calibrated so to compensate a possible *zero drift* due to temperature variations or material ageing.

Last but not least the device has modular features thus allowing single parts to be added or replaced depending on the specific installation requirements or in case of failure, without jeopardising the overall system's operation.

In addition, this device can be laid on the seabed, close to an off-shore platform or any other undersea structure and covered by a sufficiently thick soil layer to be protected against any possible undersea activities or natural events.

Finally, the same device can be connected to an external cable, installed along the said undersea structures, so to provide remote data transmission and, at the same time, constant power supply for non-stop operation.

This invention is described for illustrative but not limitative purposes, following some preferred achievements; however it goes without saying that modifications and/or changes would be introduced without departing from the relevant scope, as defined in the enclosed claims.

**Claims**

1.  A device (10) for measuring an altitude profile of soil and, preferably, seabed geometrical profile (14), the device comprising an airtight structure housing the following elements:

    - an hydraulic pressurized circuit (15), extending along a longitudinal direction, and containing a specific liquid;
    - a pneumatic circuit (16), extending along the same longitudinal direction, and communicating, at one or more measuring points, with above hydraulic circuit (15); the pneumatic circuit (16) being filled with constantly pressurised air or inert gas, so to guarantee constant pressurisation of the above hydraulic circuit (15);
    - a number of differential pressure transducers (18, 20, 22), placed at the above said one or more measuring points, between the hydraulic (15) and the pneumatic circuit (16);
- an electronic control circuit formed by: data acquisition means for acquiring data coming from said pressure transducers (18, 20, 22) and taken at said one or more measuring points; means for calculation of a pressure difference taken at a reference point called *benchmark* (13); means for storing recorded data; and means for remote data transmission to an external control unit (28),

the device (10) being adapted to compute the altitude profile difference at each of said one or more measuring points, in respect to said *benchmark* (13), said altitude profile difference, being proportional to the detected pressure differences, owing to the *communicating vessels* principle, and thus allowing a definition of the altitude profile of the device (10) along its longitudinal length.

2. The device (10) according to claim 1, wherein

- said pressure transducers (18, 20, 22) and their electronic components are respectively housed in measuring modules (25, 26, 27), as well as sections of hydraulic (15) and pneumatic circuits (16);
- said pressure transducers (18, 20, 22) are either single or double differential pressure transducers;
- said *benchmark* (13) is made of a single reference module, containing a reference vessel (23), connected to the same hydraulic circuit (15) and pneumatic circuit (16);
- each of said measuring modules (25, 26, 27) is connected to the next so to form a chain, through inner connection pipes (50); the modules being airtight, fully sealed from outer environment, made with sturdy and flexible material, and housing the sections of hydraulic (15) and pneumatic (16) circuits plus a tube containing the electrical cable;

so that the said device (10) is made of an airtight and modular structure, where one or more modules can be added or removed, according to specific installation requirements, size of the area to be monitored and accuracy detail of soil profile.

3. The device (10) according to the previous claim, including also:

- means for calibration formed by one or more switch valves (17, 19, 21) placed in each measuring module (25, 26, 27) respectively, before the pressure transducers (18, 20, 22), to switch, on demand, towards the pneumatic (16), or towards the hydraulic (15) circuit,

so that:

- in a first so called *standard working* position, each of the pressure transducers (18, 20, 22) receives the pressure from the hydraulic circuit (15) on a first membrane and the pressure from the pneumatic circuit (16) on the second membrane, so to detect the pressure difference at the same point; and
- in a second so called *calibration* position, each of the pressure transducers (18, 20, 22) receives the pressure from the hydraulic circuit (15) on a first membrane and the pressure from the same hydraulic circuit (15) on the second membrane so to detect the zero value, thus allowing calibration of the inner compensation parameters.

4. The device (10) according to the previous claim, wherein

- said electronic control circuit (31) houses, in addition, data acquisition means for remote data acquisition and commands to control the switch valves (17, 19, 21), in order to actuate a switch towards said *calibration* position or said *standard working* position;
- the electronic control circuit (31) includes, in addition to said data acquisition means, stand-alone control means which provide automatic and routine calibration of the device;
- said electronic control circuit (31) includes, in addition, processing means to acquire the zero measurement from each pressure transducer (18, 20, 22) and calibrate internal compensation parameters,

so that pressure measures, taken by each pressure transducer (18, 20, 22) are compensated, on demand or automatically, from possible *zero drift*, due, for example, to thermal variations or ageing of materials.

5. The device (10) according to the previous claim, including also:

- a *signal processing* module (33) adapted to work as a strain gauge two-channel amplifier, a double DC current generator, an inner temperature thermometer, and a multi-channel high resolution A/D converter;
- a first control module (34) including a microprocessor with a non-volatile memory for storage of calibration data that are: sensitivity and zero values;
- an inner *bus* (41), for providing a direct communication of said module (33), and an outer *field bus* (42), common to every measuring module, providing an external communication of said module (33);
- an *interface* module (39), adapted to provide impedance matching, isolation and electric protection of the active elements of communication (34, 38) against possible damage due to induced events on the external communication lines;
- a second control module (38), adapted to provide remote control of the electric valve, or switch valve (37), to activate the compensation function for possible *zero drift*; the second control module (38) further including a microprocessor adapted to generate the control signals for the actuator of the switch valve (37), according to an optimization process of energy saving;
- a number of sensors (40), placed near the module closing elements and O-rings, to detect any possible increase of humidity or water flowing into the device (10); these sensors (40) being in communication with the external control unit (28), to send signal warning for possible malfunctioning or system failure;
- a protection module (35) to isolate the electronic circuit from the power supply lines;
- a power supply unit (36) to provide power supply and convert, if necessary, the output voltage; and to reduce and/or stabilise the output voltage along with the requirements of the electronic circuits at a voltage between 10V and 200V, depending on distance and specific number of measurement modules (25, 26, 27) that work concurrently.

6. The device (10) according to claim 5, wherein

- said optimisation process for energy saving, in the remote control of the switch valve (37), consists in providing a maximum voltage supply to the switch valve (37) at the very beginning of its actuation, and decrease the voltage to a minimum operation level, during the reading of the zero value.

7. The device (10) according to claims 2-6, wherein

- said connection pipe (50) is sealed and airtight and, during factory assembly, filled with inert gas at atmospheric pressure (52);
- said device (10) also houses an elastic membrane, placed in the pneumatic circuit at the side of the *benchmark* (13), the membrane being adapted to compensate possible small volume variations and, as a consequence, pressure variations of the gas inside,

so that the atmospheric pressure is kept inside device (10) at a constant level, even in case of small mechanical deformations, due, for instance, to installation at significant depth on the seabed.

8. The device (10) according to claims 2-7, wherein

- said electric communication circuit, installed in said pipe (50), houses a pair of independent electrical cables (54 and 55) for respective transmission of: a.) the power supply to the electronic equipment, and b) the digital data from/to the external control unit (28);
- said cables (54 and 55) connect a first set of measuring modules (25, 26, 27), in even positions and a second set of measuring modules (25, 26, 27) in odd positions, respectively;

so that the same device (10) will operate non-stop even in case of failure in a single measuring module that would cause the interruption of the electric transmission chain, thus assuring at least 50% of functionality.

9. The device (10) according to claims 2-8, wherein

- said measuring modules (25, 26, 27) are in a number ranging from 2 to 250;
- said device (10) includes a number of modules (25, 26, 27) corresponding to an overall length extending from 2 metres to at least 3 kilometres or more;
- the configuration of modules (25, 26, 27) may have a linear geometrical profile, or a spokes or a tree pattern;
- each of said modules (25, 26, 27) has a cylindrical shape, with sizes from 60 to 200 mm as diameter, and from 150 to 800 mm as length.

**10.** The device (10) according to one or more of previous claims, wherein

- the measuring modules (25, 26, 27) are made of a plastic material like *nylon77®*, or a metallic material like stainless steel *AISI 316L*;
- each connecting pipe (50) is made of a specific plastic material like *nylon®, rilsan®*, or polypropylene;
- the liquid filling the hydraulic circuit (15) is a steady anti-corrosive liquid, having a density of more than 0.5 kg/m$^3$; wherein for on-shore applications this liquid is a diluted ethylene glycol, or a very fluid silicone oil (1-2 Cst) and for off-shore applications this liquid is a substance with low environmental impact such as *galden® or fomlin®*.

**Patentansprüche**

**1.** Eine Vorrichtung (10) zur Vermessung von Höhenlagen des Erdbodens und vorzugsweise der Oberfläche des Meeresbodens (14), wobei die Vorrichtung eine hermetische abgedichtete Struktur umfasst, in deren Innerem folgendes installiert ist:

- ein Hydraulikdruckkreislauf (15), der sich entlang einer Längsrichtung erstreckt und der in seinem Inneren ein Flüssigmaterial enthält;
- ein pneumatischer Kreislauf (16), der sich entlang derselben Längsrichtung erstreckt und der mit dem vorgenannten Hydraulikkreislauf (15) an einem oder mehreren Messpunkten verbunden ist; dieser pneumatischer Kreislauf (16) enthält in seinem Inneren Luft unter konstantem Druck oder auch Inertgas, um den Druckausgleich des vorgenannten Hydraulikkreislaufs (15) zu gewährleisten;
- eine Reihe entsprechender Differenzialdruck-Wandler (18, 20, 22); diese befinden sich in Entsprechung des oder der obengenannten Messpunkte, zwischen besagtem Hydraulikkreislauf (15) und besagtem pneumatischer Kreislauf (16);
- ein elektronischer Steuerkreis, der seinerseits folgendes enthält: Mittel zur Datenerfassung der Daten, die aus den obengenannten Druckwandlern stammen (18, 20, 22) und in Bezug auf Druckmessungen, die an dem oder den obengenannten Messpunkten vorgenommen werden; Mittel zur Berechnung der Druckdifferenzen im Vergleich zu einem Bezugspunkt, genannt *Fixpunkt* (13); Mittel zum Speichern von erfassten Daten; und Mittel zum Fernübertragen der Daten selbst, an eine externe Steuereinheit (28),

so, dass die Berechung der Höhendifferenz des oder der obengenannten Messpunkte im Vergleich zum genannten *Fixpunkt* (13) möglich ist, wobei diese Differenz aufgrund des Prinzips der *kommunizierenden Gefäße* direkt proportional zur entsprechenden erfassten Druckdifferenz ist; und so, dass somit die Höhenlage der Vorrichtung (10) entlang seiner gesamten Längserstreckung bestimmt werden kann.

**2.** Die Vorrichtung (10) gemäß Anspruch 1, wobei:

- die genannten Druckwandler (18, 20, 22) und die entsprechenden elektronischen Teile in den jeweiligen Messmodulen (25, 26, 27) enthalten sind, in deren Innerem ferner die jeweiligen Abschnitte des vorgenannten Hydraulikkreislaufs (15) und des vorgenannten pneumatischen Kreislaufs (16) enthalten sind;
- die vorgenannten Druckwandler (18, 20, 22) einzelne Differenzialdruck-Wandler oder auch doppelte Differenzialdruck-Wandler sind;
- der vorgenannte *Fixpunkt* (13) aus einem Referenzmodul besteht, das ein Bezugsgefäß (23) enthält, das auch mit demselben vorgenannten Hydraulikkreislauf (15) und pneumatischen Kreislauf verbunden ist (16);
- jedes der besagten Messmodule (25, 26, 27) ist mit einem anderen anliegenden verbunden, um durch die entsprechenden Leitungen (50) eine Kette zu bilden. Die hermetisch von der äußeren Umgebung abgedichteten Messmodule sind aus strapazierfähigem und flexiblen Material hergestellt und in ihnen sind die jeweiligen Abschnitte des vorgenannten Hydraulikkreislaufs (15) und des vorgenannten pneumatischen Kreislaufs enthalten (16) und ein entsprechender Abschnitt der Verbindungsrohre der elektrischen Signale,

so dass die Vorrichtung (10) aus einer hermetisch abgedichteten und modularen Struktur besteht, an der ein oder mehrere Module je nach spezifischen Installationsanforderungen, der Ausdehnung der zu kontrollierenden Oberfläche und der erforderlichen Detailgenauigkeit für die Erfassung des Geländeprofils angefügt oder entfernt werden können.

**3.** Diese Vorrichtung (10) umfasst entsprechend dem vorstehenden Anspruch ferner:

- Mittel zur Kalibrierung, bestehend aus einem oder mehreren Schaltventilen (17, 19, 21), jeweils zu jedem Messmodul (25, 26, 27) angeordnet, die den vorgenannten Druckwandlern (18, 20, 22) vorgelagert und in der Lage sind, auf Befehl in Richtung des vorgenannten pneumatischen Kreislaufs oder in Richtung des vorgenannten Hydraulikkreislaufs zu wechseln.

so dass:

- in einer ersten Position des *Standardbetriebs*, der entsprechende Druckwandler (18, 20, 22) auf einer Membran dem vom Hydraulikkreislauf übertragenen Druck ausgesetzt ist und auf einer weiteren Membran dem vom pneumatischen Kreislaus übertragenen Druck ausgesetzt ist, um so gewissenhaft die Messung der Druckdifferenz zu erfassen; und
- in einer zweiten Kalibrierungsposition der entsprechende Druckwandler (18, 20, 22) auf einer Membran dem vom Hydraulikkreislauf (15) übertragenen Druck ausgesetzt ist und auf einer weiteren Membran dem vom pneumatischen Kreislaus (15) übertragenen Druck ausgesetzt ist, um den Nullwert zu erfassen und die Kalibrierung der internen Kompensationsparameter zu ermöglichen.

4. Die Vorrichtung (10) entsprechend dem vorstehenden Anspruch, bei dem:

- der vorgenannte elektronischer Steuerkreis (31) ferner Mittel zum Erfassen von übertragenen Remotedaten und bezüglich der Befehle umfasst, die ihrerseits auf die vorgenannten Schaltventile (17, 19, 21) übertragen werden, um eine jeweilige Umschaltung auf die *Kalibrierungsposition* oder auf die Position des *Standardbetriebs* auszuführen;
- der vorgenannte elektronische Steuerkreis (31) umfasst zusätzlich zu den vorgenannten Mitteln zum Erfassen von übertragenen Remotedaten Mittel zur Verwaltung nach einem komplett autonomen Modus. Dieser Modus sieht die automatische und regelmäßige Kalibrierung der Vorrichtung vor;
- der vorgenannte elektronische Steuerkreis (31) umfasst ferner Mittel zur Verarbeitung, die in der Lage sind, den vorgenannten Nullwert von jedem Druckwandler (18, 20, 22) zu erfassen und die internen Kompensationsparameter zu kalibrieren,

so dass die Druckmessungen, die von jedem Druckwandler (18, 20, 22) ausgeführt werden, auf Befehl oder automatisch, nach etwaigen *Abweichungen vom Nullwert* durch Temperaturschwankungen oder Materialverschleiß kompensiert werden.

5. Die Vorrichtung (10) umfasst entsprechend dem vorstehenden Anspruch ferner:

- ein Modul zur *Signalverarbeitung* (33), das folgende Funktionen ausführt: Zweikanal-Verstärker für Dehnungsbrücken, Doppel-Gleichstromgenerator, einen Innentemperaturmesser, ein AD-Mehrkanalwandler mit hoher Auflösung;
- ein erstes Steuermodul (34), das einen Mikroprozessor mit einem nichtflüchtigen Speicher, in welchem die Daten bezüglich der vorgenannten *Kalibrierungsphase* gespeichert sind, umfasst: Sensibilitätswerte und Nullwert;
- ein interner *Bus* (41), durch welchen das vorgenannte Modul zur *Signalverarbeitung* (33) intern kommuniziert und ein *Feldbus* (42), der extern ist und gemeinsam für alle Messmodule, durch welche das vorgenannte Modul zur *Signalverarbeitung* (33) extern kommuniziert;
- ein *Schnittstellen-Modul* (39), das Impedanzanpassung, Isolierung und elektrischen Schutz der aktiven Kommunikationselemente (34, 38) vor etwaigen auf den externen Kommunikationslinien induzierte Beschädigungen, bietet;
- ein zweites Steuermodul (38), das die Fernbedienung des Schaltventils ausführt, um nach etwaigen *Abweichungen* vom *Nullpunkt* den vorgenannten Kompensationsbetrieb zu aktivieren; das zweite Steuermodul (38) umfasst ferner einen Mikroprozessor, der die Steuerung für den Antrieb des Ventils (37), gemäß eines Verfahrens zur Optimierung des Energieverbrauchs liefert;
- eine Reihe von Sensoren (40), die entsprechend der Verschlusselemente und der Dichtungen des Moduls installiert sind. Sie sind in der Lage etwaige Erhöhungen der Luftfeuchtigkeit oder das Vorhandensein von Wasser im Inneren der Vorrichtung (19) zu erfassen; besagte Sensoren (40) sind in Verbindung mit genannter externen Steuereinheit (28), zu der sie Daten von etwaigen Anomalien oder Funktionsstörungen übertragen;
- ein Schutzmodul (35), um den elektronischen Schaltkreis von den Stromleitungen zu isolieren;
- ein Leistungsmodul (36), zur Anpassung und Umwandlung des Spannungswerts auf den Versorgungsleitungen und zur Reduzierung und Stabilisierung des Niveaus der Ausgangsspannung auf die vom elektronischen Schaltkreis erforderlichen Werte, mit einer Versorgungsspannung zwischen 10V und 200V, je nach Abstand und Anzahl der Messmodule (25, 26, 27) in gleichzeitigem Betrieb.

**6.** Die Vorrichtung (10) gemäß Anspruch 5, wobei:

- das vorgenannte Verfahren zur Optimierung des Energieverbrauchs, in der Fernbedienung des Schaltventils (37) sieht vor, dass das Schaltventil selbst (37) in den ersten Augenblicken der Aktivierung der maximalen Spannung zugeführt wird und dann einem minimalen Betriebswert, der für die gesamte Messzeit des Nullwerts beibehalten wird, zugeführt wird.

**7.** Die Vorrichtung (10) gemäß einem oder mehreren der Ansprüche 2 bis 6, wobei:

- die vorgenannte Leitung (50) nach außen isoliert und hermetisch abgedichtet ist und während der Werkmontage im Inneren (52) mit einem Inertgas, das auf den atmosphärischen Druck vorbereitet ist, gesättigt ist;
- die Vorrichtung (10) umfasst ferner eine elastische Membran, die auf der Seite des Fixpunkts (13) positioniert ist, um etwaige kleine Volumenveränderungen und somit des Drucks des im Inneren enthaltenen Gas zu kompensieren,

so dass der atmosphärischen Druck innerhalb der Vorrichtung (10) auch bei kleinen mechanischen Verformungen, die zum Beispiel durch die Installation in der Tiefe verursacht wurden, gehalten werden kann.

**8.** Die Vorrichtung (10) gemäß der Ansprüche 2 bis 7, wobei:

- die vorgenannten Kommunikationsleitungen der elektrischen Signale, die in der Leitung (50) installiert sind, sind ein Paar von Schläuchen (54 und 55), die unabhängig voneinander sind und die elektrischen Kabel enthalten; von diesen, sind einige Kabel für die Leistungsübertragung an den vorgenannten elektronischen Steuerkreis verantwortlich, während andere Kabel die Übertragung der digitalen Daten von/zu besagter externen Steuereinheit übermitteln (28);
- die vorgenannten Schläuche (54 und 55) verbinden entsprechend miteinander eine erste Gruppe von Messmodulen (25, 26, 27) auf geraden Positionen und eine zweite Gruppe von Messmodulen auf ungeraden Positionen,

so dass die Vorrichtung (10) weiter betrieben werden kann, auch bei einer Fehlstörung eines dieser Module (25, 26, 27), das die Unterbrechung der elektrischen Übertragungskette verursacht und so auch in diesem Fall mindestens 50% der Funktionalität gewährleistet ist.

**9.** Die Vorrichtung (10) gemäß der Ansprüche 2 bis 8, wobei:

- die vorgenannten Messmodule (25, 26, 27) in einer Anzahl zwischen 2 und 250 vorhanden sind;
- die Vorrichtung (10) enthält eine Reihe von Messmodulen (25, 26, 27) entsprechend einer Gesamtlänge derselben Vorrichtung zwischen 2 Metern und wenigstens 3 km oder mehr;
- die Anordnung der Module (25, 26, 27) ist derart, dass ein geometrisch lineares Profil, radial oder als Baumdiagramm, befolgt wird;
- jedes der Module (25, 26, 27) hat eine zylindrische Form. Seine Abmessungen sind zwischen 60 und 200 mm Durchmesser und zwischen 150 und 800 mm Länge.

**10.** Die Vorrichtung (10) gemäß einem oder mehreren der vorhergehenden Ansprüche, wobei:

- die vorgenannten Messmodule (25, 26, 27) aus einem Kunststoffmaterial hergestellt sind, wie zum Beispiel Nylon77® oder auch aus einem metallischen Material, wie zum Beispiel Edelstahl AISI 316L;
- jedes der vorgenannten Rohre (50) ist aus einem Kunststoffmaterial hergestellt, wie zum Beispiel Nylon®, Rilsan® oder Polypropylen;
- das vorgenannten flüssige Material im Inneren des Hydraulikdruckkreislaufs (15) besteht aus einer stabilen und korrosionsfesten Flüssigkeit, die eine Dichtigkeit größer als $0,5 \ kg/m^3$ hat: für Anwendungen auf dem Boden ist besagte Flüssigkeit ein verdünntes Ethylenglykol oder ein sehr flüssiges Silikonöl (1-2 *Centistokes*); für Anwendungen im Meer ist diese Flüssigkeit eine Substanz mit geringer Umweltbelastung, wie Galden® oder Fomlin®.

**Revendications**

**1.** Un dispositif (10) pour mesurer un profil d'altitude du sol terrestre, et de préférence de la superficie du fond marin (14), le dispositif incluant une structure hermétiquement fermée, à l'intérieur de laquelle sont installés:

- un circuit hydraulique pressurisé (15), qui s'étend le long d'une direction longitudinale, et qui contient un matériel liquide;
- un circuit pneumatique (16), qui s'étend le long de la même direction longitudinale, et qui communique, avec le circuit hydraulique susdit (15), en correspondance d'un ou plusieurs points de mesurage; ce circuit pneumatique (16) contenant de l'air à pression constante, ou un gaz inerte, apte à garantir la pressurisation du circuit hydraulique susdit (15);
- une série de transducteurs de pression différentielle respectifs (18, 20, 22); placés en correspondance des points de mesurage susdits, entre le circuit hydraulique (15) et le circuit pneumatique (16);
- un circuit électronique de contrôle, qui inclut à son tour: des moyens d'acquisition de données provenant des transducteurs de pression susdits (18, 20, 22), et relatives à des mesurages de pression effectués aux points de mesurage susdits; des moyens de calcul des différences de pression par rapport à un point de référence, appelé *point d'appui* (13); des moyens pour l'emmagasinage de l'historique des données; et des moyens pour la transmission de ces mêmes données à distance, vers une unité de contrôle externe (28),

de façon à permettre de calculer la différence d'altitude des points susdits, par rapport au *point d'appui* (13), cette différence d'altitude étant, pour le principe des *vases communicants*, directement proportionnelle à la différence de pression relevée respective; et de façon à déterminer donc le profil altimétrique du dispositif (10) le long de toute son extension longitudinale.

**2.** Dispositif (10) selon la revendication 1, dans lequel:

- les transducteurs de pression susdits (18, 20, 22) et les parties électroniques correspondantes, sont contenus dans les modules de mesurage respectifs (25, 26, 27), à l'intérieur desquels sont contenus ultérieurement le circuit hydraulique (15) et le circuit pneumatique (16) susdits;
- les transducteurs de pression susdits (18, 20, 22), sont des transducteurs de pression différentielle simples, ou des transducteurs de pression différentielle doubles;
- le *point d'appui* susdit (13) est constitué d'un module de référence, contenant un vase de référence (23), raccordé également aux mêmes circuit hydraulique (15) et circuit pneumatique (16) susdits;
- chaque module de mesurage (25, 26, 27) est raccordé à un autre module adjacent afin de construire une chaîne, à travers des conduits respectifs (50), hermétiques par rapport au milieu extérieur, et réalisés dans un matériel robuste et flexible, à l'intérieur desquels sont contenus le circuit hydraulique (15) et le circuit pneumatique (16) susdits, ainsi que les tubes de communication des signaux électriques,

de façon à ce que le dispositif (10) soit constitué d'une structure hermétiquement fermée et modulaire, à laquelle peuvent être ajoutés ou éliminés un ou plusieurs modules, sur la base des exigences spécifiques d'installation, de l'extension de la superficie à contrôler, et du niveau de détail demandé pour le relevé du profil du terrain.

**3.** Dispositif (10) selon la revendication précédente, incluant ultérieurement:

- des moyens d'étalonnage, constitués d'une ou plusieurs vannes de déviation (17, 19, 21), placées respectivement dans chaque module de mesurage (25, 26, 27), au début des transducteurs de pression susdits (18, 20, 22), et aptes à permuter, sur commande, vers le circuit pneumatique (16), ou vers le circuit hydraulique susdits (15),

de façon à ce que:

- dans une première position de fonctionnement *standard*, le transducteur de pression respectif (18, 20, 22) soit soumis sur une membrane à la pression transmise par le circuit hydraulique (15), et sur l'autre membrane à la pression transmise par le circuit pneumatique (16), de façon à relever le mesurage de la différence de pression ponctuelle; et
- dans une deuxième position d'*étalonnage*, le transducteur de pression respectif (18, 20, 22) sois soumis sur une membrane à la pression transmise par le circuit hydraulique (15), et sur l'autre membrane à la pression transmise par le même circuit hydraulique (15), de façon à relever le mesurage du zéro et de permettre l'étalonnage des paramètres de compensation internes.

**4.** Dispositif (10) selon la revendication précédente, dans lequel:

- le circuit électronique de contrôle susdit (31) inclut ultérieurement des moyens d'acquisition de données transmises à distance, et relatives à des commandes qui sont à leur tour transmises vers les vannes de déviation susdites (17, 19, 21), pour mettre en oeuvre une permutation respective vers la position d'*étalonnage* ou vers la position de fonctionnement *standard*;

- le circuit électronique de contrôle susdit (31) inclut, en plus des moyens d'acquisition de données transmises à distance susdits, des moyens de gestion selon une modalité complètement autonome, cette modalité prévoit l'étalonnage automatique et périodique du dispositif;
- le circuit électronique de contrôle susdit (31) inclut ultérieurement des moyens d'élaboration, aptes à acquérir le mesurage du zéro susdit de chaque transducteur de pression (18, 20, 22), et d'étalonner des paramètres de compensation internes,

de façon à ce que les mesurages de pression, effectués par chaque transducteur de pression (18, 20, 22), soient compensés, par commande ou automatiquement, par d'éventuelles *dérivations du zéro*, dues per exemple à des variations de température ou au vieillissement des matériaux.

**5.** Dispositif (10) selon la revendication précédente, incluant ultérieurement:

- un module d'*élaboration des signaux* (33) qui exerce les fonctions: d'amplificateur à deux canaux pour jauge de contrainte, de double générateur de courant continu, de mesureur de la température interne, de convertisseur analogique/numérique multicanal haute résolution;
- un premier module de contrôle (34) qui inclut un microprocesseur avec mémoire non volatile, dans laquelle sont emmagasinées les données relatives à la phase d'*étalonnage* susdite: valeur de sensibilité et de zéro;
- un *bus* interne (41) à travers lequel le module d'*élaboration des signaux* susdit (33) communique de façon interne, et un *bus de terrain* (42), qui est externe et en commun à tous les modules de mesurage, à travers lequel le module d'*élaboration des signaux* susdit (33) communique de façon externe;
- un module d'*interface* (39), préposé à l'adaptation d'impédance, à l'isolation et à la protection électrique des éléments actifs de communication (34, 38) d'éventuels phénomènes nuisibles induits sur les lignes extérieures de communication;
- un deuxième module de contrôle (38) qui exerce la fonction de contrôle à distance de la vanne de déviation (37), pour activer la fonction de compensation susdite d'éventuelles *dérivations du zéro*; le deuxième module de contrôle (38) incluant ultérieurement un microprocesseur qui fournit le contrôle de l'actionneur de la vanne (37), selon un procédé d'optimisation de la consommation d'énergie;
- une série de capteurs (40) installés en correspondance des éléments de fermeture et des joints du module, aptes à relever l'éventuelle augmentation du taux d'humidité ou la présence d'eau à l'intérieur du dispositif (10), ces capteurs (40) étant en communication avec l'unité de contrôle externe (28), vers laquelle ils transmettent des données d'éventuelles anomalies ou pannes;
- un module de protection (35) préposé à isoler le circuit électronique des lignes d'alimentation;
- un module d'alimentation (36) préposé à l'adaptation et à la conversion du niveau de tension présent sur les lignes d'alimentation, en plus de la réduction et de la stabilisation du niveau de tension en sortie aux valeurs demandées par les circuits électroniques, avec une tension d'alimentation comprise entre 10V et 200V, en fonction de la distance et du nombre de modules de mesurage (25, 26, 27) actifs au même moment.

**6.** Dispositif (10) selon la revendication 5, dans lequel:

- la procédure d'optimisation de la consommation d'énergie susdite, lors du contrôle à distance de la vanne de déviation (37), prévoit que cette même vanne de déviation (37) soit alimentée lors des premiers instants d'activation à la tension maximale, et soit ensuite alimentée à une valeur minimale de fonctionnement maintenu pendant tout le temps de *mesurage du zéro*.

**7.** Dispositif (10) selon une ou plusieurs des revendications de 2 à 6, dans lequel:

- le conduit susdit (50) est isolé de l'extérieur, hermétique et, pendant la phase d'assemblage dans l'usine, est saturé du côté intérieur (52) avec un gaz inerte qui est prédisposé à la pression atmosphérique;

- le dispositif (10) inclut ultérieurement une membrane élastique, placée du côté du point d'appui (13), apte à compenser d'éventuelles petites variations de volume, et donc de pression, du gaz contenu à l'intérieur,

de façon à ce que la pression atmosphérique puisse être maintenue à l'intérieur du dispositif (10), même en cas de petites déformations mécaniques, déterminées par exemple par l'installation en profondeur.

8.  Dispositif (10) selon les revendications de 2 à 7, dans lequel:

- les tubes de communication des signaux électriques susdits, installés dans le conduit (50), sont un couple de tubes (54 et 55), indépendants entre eux, qui contiennent les câbles électriques; parmi ceux-ci, certains câbles sont préposés à la transmission de l'alimentation au circuit électronique de contrôle susdit, tandis que d'autres câbles font circuler la transmission des données numériques depuis/vers l'unité de contrôle externe (28);
- les tubes susdits (54 et 55) raccordent respectivement un premier ensemble de modules de mesurage (25, 26, 27) dans une position paire, et un deuxième ensemble de modules de mesurage (25, 26, 27) en position impaire,

de façon à ce que le dispositif (10) puisse continuer à fonctionner même en cas de panne d'un de ces modules (25, 26, 27), qui détermine l'interruption de la chaîne de transmission électrique, en garantissant également dans ce cas au moins 50 % de la fonctionnalité.

9.  Dispositif (10) selon les revendications de 2 à 8, dans lequel:

- les modules de mesurage susdits (25, 26, 27) sont au nombre de 2 à 250;
- le dispositif (10) contient un nombre de modules de mesurage (25, 26, 27) correspondant à une longueur globale de ce même dispositif entre 2 mètres et au moins 3 km, ou plus;
- la disposition des modules (25, 26, 27) est de façon à suivre un profil géométrique linéaire, à rayons, ou en arbre;
- chaque module (25, 26, 27) a une forme cylindrique, dont les dimensions sont inclues entre 60 et 200 mm de diamètre, et entre 150 et 800 mm de longueur.

10. Dispositif (10) selon une ou plusieurs des revendications précédentes, dans lequel:

- les modules de mesurage susdits (25, 26, 27) sont constitués de matériel plastique, come, par exemple, *nylon77*®, ou de matériel métallique, comme, par exemple, acier inoxydable AISI 316L;
- chacun des conduits susdits (50) est constitué de matériel plastique, comme, par exemple, le *nylon*®, le *rilsan*® ou le polypropylène;
- le matériel liquide susdit, contenu à l'intérieur du circuit hydraulique (15), est constitué d'un liquide stable et anticorrosion, ayant une densité supérieure à 0,5 kg/m$^3$: pour les applications sur la terre ce liquide est un glycol éthylénique dilué, ou une huile au silicone très fluide, (1-2 *centistokes*); pour les applications dans la mer, ce liquide est une substance à bas impact environnemental, comme le galden® ou le fomlin®.

FIG. 1

FIG. 2

FIG. 3

FIG. 4

FIG. 5

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2347105 A